# EUROPÄISCHE PATENTSCHRIFT

(11) **EP 0 890 095 B1**
(45) Veröffentlichungstag und Bekanntmachung des Hinweises auf die Patenterteilung: **21.11.2007**
(21) Anmeldenummer: 97914293.2
(22) Anmeldetag: 22.03.1997
(51) Int. Cl.: G01N 21/77

(54) **INTEGRIERT OPTISCHER LUMINESZENZSENSOR**
INTEGRATED OPTICAL LUMINESCENCE SENSOR
CAPTEUR OPTIQUE DE LUMINESCENCE INTEGRE

(30) Priorität: 30.03.1996 DE 19612868
(43) Veröffentlichungstag der Anmeldung: 13.01.1999
(73) Patentinhaber: Novartis AG, 4056 Basel (CH)
(72) Erfinder: DANIELZIK, Burkhard, D-55218 Ingelheim (DE); NEUSCHÄFER, Dieter, CH-4132 Muttenz (CH); PAWLAK, Michael, D-79725 Laufenburg (DE); DUVENECK, Gert, Ludwig, D-79189 Bad Krozingen (DE)
(74) Vertreter: Dannappel, Hans-Jochen
(86) Internationale Anmeldenummer: PCT/EP1997/001468
(87) Internationale Veröffentlichungsnummer: WO 1997/037211

(56) Entgegenhaltungen:
- WO-A-89/09394
- WO-A-95/33197
- WO-A-95/33198
- DE-A- 4 433 753
- SPIE PROCEEDINGS, Bd. 1886, 1993, Seiten 2-8, XP000672419 CHRISTENSEN D ET AL: "analysis of excitation and collection geometries for planar waveguide immunosensors" in der Anmeldung erwähnt

## Beschreibung

Die Erfindung betrifft einen integriert optischen Lumineszenzsensor mit einem Anregungslichtbündel mit einer ersten optischen Achse, mit einem planaren Wellenleiter, mit einer mit dessen evaneszentem Feld wechselwirkenden Probe und mit einem vom Wellenleiter abgehenden Detektionsstrahlengang mit einer zweiten optischen Achse und mit einem Auskoppelgitter zur Auskopplung des im Wellenleiter geführten Teils des Lumineszenzlichts, bei dem das mittels eines Lumineszenzdetektors zu detektierende Lumineszenzlicht vom Anregunglicht räumlich getrennt ist.

Derartige Sensoren werden nach dem Stand der Technik eingesetzt, um oberflächen-sensitive optische Stoff-Sensoren zu betreiben. In der Affinitäts-Sensorik werden die nachzuweisenden Moleküle selektiv an die Sensoroberfläche gebunden und durch die Wechselwirkung mit der geführten Lichtwelle nachgewiesen. Im Falle der direkten Affinitäts-Sensorik geschieht dies durch die Messung von Brechzahländerungen, alternativ kann die von der geführten Welle angeregte Lumineszenzstrahlung nachgewiesen werden.

Die Verwendung planarer Wellenleiter zum Nachweis lumineszierender Substanzen ist in D. Christensen et al. Proc. SPIE 1886 (1993), 2-8 beschrieben. Der Strahlengang liegt in einer Ebene, so dass zur Unterdrückung von Reflexionen und Streulicht (z.B. von den Sensorkanten) die Verwendung von dichroitischen Strahlteilern und von Kantenfiltern notwendig ist, mit Nachteilen für den dynamischen Bereich und die Nachweisempfindlichkeit.

Sensoren mit planaren Wellenleitern und einem oder mehreren Gitterkopplern zum Ein- und/oder Auskoppeln der geführten Wellen sind z.B. aus WO 93/01487 bekannt, jedoch nur für die direkte Nachweismethode über die Brechzahländerung.

Für die Verwendung dieser Anordnungen zum Lumineszenznachweis kann von Nachteil sein, dass generell die Strahlführung in einer optischen Ebene senkrecht zur Wellenleiteroberfläche erfolgt (d.h. k-Vektoren von ein- und ausgekoppelter Strahlung liegen in einer optischen Ebene). Daher sind für die Separation von Anregungs- und Lumineszenzlicht, sowie zur Unterdrückung von Reflexionen und Streulicht, auch hier Massnahmen wie dichroitische Strahlteiler, Blenden, Interferenz-, Notch- oder Kantenfilter notwendig.

Auch bei der in US-A-5,081,012 beschriebenen Anordnung unter Verwendung von Koppelgittern erfolgt die Kopplung von Anregungs- und Lumineszenzlicht kollinear oder Anregungs- und Lumineszenzstrahlengang liegen in einer optischen Ebene. Zur räumlichen Separation dieser Lichtanteile müssen gekrümmte Gitterlinien verwendet werden, die zu einer sehr aufwendigen Fertigung des Sensorelementes führen.

Ein Verfahren und eine Anordnung dieser Art sind auch in der WO 95/33198 beschrieben.

Die Erfindung geht von der Aufgabe aus, eine hintergrundarme, hochempfindliche Lumineszenz-Detektion unter Verwendung einer optischen Sensorplattform mit einem Koppelgitter zu ermöglichen, bei der durch die Strahlführung von Anregungs- und Lumineszenzlicht oder zusätzlich durch Verwendung unterschiedlicher Polarisationseigenschaften von Anregungs- und Lumineszenzlicht eine räumliche Trennung von Anregungslicht - einschliesslich Reflexionen - und Lumineszenzlicht erreicht wird.

Die Aufgabe wird gelöst mit einem Lumineszenssensor gemäss Anspruch 1.

Ein bevorzugter Integrierter optischer Lumineszenzsensor umfasst
- ein Detektionssystem mit einem Detektionsstrahlengang (60, 61, kₐᵤₛ) und einem Detektor (11), welches das Lumineszenzlicht nachweist, vorhanden ist,
- durch ein Einkoppelgitter (4) ein Anregungslichtbündel (A) in den Wellenleiter (1) eingekoppelt wird, eine geführte Welle (5) ausbildet und so mit der Probe (80) wechselwirkt und Lumineszenzlicht erzeugt.

Bei vorbekannten Sensoren waren diese in hochsymmetrischen Anordnungen stets koplanar, so wie das bei "direkten" Sensoren, die Brechzahländerungen auswerten, gebräuchlich und sinnvoll ist.

Die Lösung des Anspruchs 1 hebt die Symmetrie des Sensors schon an der ersten möglichen Stelle auf und kippt die Eintrittsebene gegen die Einkoppelebene. Der Kippwinkel (θ) beträgt ca. 1° bis 30°, bevorzugt 2° bis 15° und orientiert sich am Divergenzwinkel des Anregungslichtstrahls, aber auch des Detektionsstrahlenganges. Vorteilhafte Weiterbildungen sind Gegenstand entsprechender Unteransprüche.

Vorzugsweise ist der Winkel (θ) grösser als der Divergenzwinkel des Anregungslichtbündels (A).

Anspruch 1 gibt dabei die Variante mit Erfassung der in den Raum emittierten Lumineszenzstrahlung ohne Einfluss des Wellenleiters und die Erfassung des in den Wellenleiter eingekoppelten Lumineszenzlichts mit Einsatz eines Auskoppelgitters an. Auch die simultane Ausführung beider Detektionsarten ist möglich und sinnvoll.

Diese Konfiguration ist besonders unempfindlich gegen kleine Dejustierungen und Winkeländerungen. Dies ist vor allem beim Sensorwechsel von grosser Bedeutung, sowie bei Fertigungstoleranzen des Sensors.

Ein weiterer Vorteil der erfindungsgemässen Anordnung ist die mögliche kompakte Ausführung des Strahlführungssystems in einem integrierten Modul, in dem alle zur Verwendung des Sensors notwendigen Lichtstrahlen eingekoppelt, ausgekoppelt und detektiert werden können. Die ermöglichte Miniaturisierung dient auch vorteilhaft zur Reduzierung von umweltbedingten Störeinflüssen, wie z.B. Fremdlicht und Vibration.

Anspruch 5 betrifft ebenfalls die Erfassung des in den Wellenleiters eingekoppelten Lumineszenzlichts, jedoch hier mit Einsatz des zur Einkopplung des Anregungslichts vorgesehenen Einkoppelgitters. Diese Ausführung wird dadurch ermöglicht, dass es für die Ausbreitungsrichtung des in den Wellenleiter eingekoppelten und in diesem geführten Lumineszenzlichts überraschenderweise keine Vorzugsrichtung gibt. Wiederum ist auch eine simultane Ausführung dieser Detektionsart zusammen mit einer oder beiden zuvor beschriebenen Detektionsarten möglich. Darüber hinaus hat diese Ausführung den Vorteil, dass sowohl für die Einkopplung des Anregungslichts als auch für die Auskopplung des im Wellenleiter geführten Lumineszenzlichts mit anschliessender Detektion dasselbe Gitter verwendet werden kann.

Der Anspruch 6 betrifft die Ausprägung der schiefen Geometrie mit dem Ziel, im Detektor für das Lumineszenzlicht möglichst wenig Störung durch Anregungslicht zu erhalten. Möglich ist auch eine (Ausführungs-)Form, wonach das Anregungslichtbündel und der Detektionsstrahlengang in Querschnitt, Divergenz, Orientierung und Auftreffort auf dem Wellenleiter derart ausgeführt sind, dass Licht aus dem Anregungslichtbündel nicht durch eine einzige Reflexion an einer beliebigen Fläche in den Detektionsstrahlengang gelangen kann.

Unterschiedliche Polarisationseigenschaften von Anregungs- und Lumineszenzlicht können zusätzlich und gemäss Anspruch 7 grundsätzlich dann vorteilhaft ausgenutzt werden, wenn vollständig polarisiertes Anregungslicht, d. h. vollständig transversal magnetisch polarisiertes Anregungslicht (TM), zur Anregung eines im Wellenleiter geführten TM-Modes, oder vollständig transversal elektrisch polarisiertes Anregungslicht (TE), zur Anregung eines im Wellenleiter geführten TE-Modes, verwendet wird. Von Vorteil ist es dabei, gemäss Anspruch 8 für die Detektion des Lumineszenzlichtes eine von der Polarisation des Anregungslichts verschiedene Polarisation auszuwählen.

Von besonderem Vorteil ist die polarisationsselektive Detektion des in den Wellenleiter eingekoppelten und mit einem Koppelgitter ausgekoppelten Teils des Lumineszenzlichts, da unterschiedlich polarisiertes Licht unter verschiedenen Winkeln ausgekoppelt wird. Damit kann die räumliche Trennung von ausgekoppeltem Anregungslicht und ausgekoppeltem Lumineszenzlicht, welche sich aus der spektralen Verschiebung ergibt und in Auskopplung unter verschiedenen Winkeln resultiert, noch deutlich vergrössert werden. Da die Ausbreitung von eingekoppeltem Lumineszenzlicht im Wellenleiter überraschenderweise ohne Vorzugsrichtung geschieht, ist es dabei möglich, eingekoppeltes Lumineszenzlicht sowohl an einem Auskoppelgitter (7) als auch an dem zur Einkopplung des Anregungslichts verwendeten Gitter (4) auszukoppeln und mit einem Detektor nachzuweisen. Bevorzugt ist bei der Verwendung von TE-polarisiertem Anregungslicht den über ein Koppelgitter ausgekoppelten Anteil des in den Wellenleiter eingekoppelten TM-polarisierten Lumineszenzlichts nachzuweisen, bzw. bei Verwendung von TM-polarisiertem Anregungslicht den über ein Koppelgitter ausgekoppelten Anteil des in den Wellenleiter eingekoppelten TE-polarisierten Lumineszenzlichts.

Berechnet man den in den Wellenleiter eingekoppelten Anteil der Lumineszenz eines in unmittelbarer Nähe zum Wellenleiter abstrahlenden Dipols mit Hilfe des sogenannten Helmholtz-Ansatzes, der z.B. in Novotny, Journal of Optical Society of America A14, S. 91 (1997), dargestellt ist, stellt sich überraschenderweise heraus, dass durch die Wechselwirkung mit dem evaneszenten Feld des Wellenleiters die Lumineszenz lebensdauer des Dipols abnimmt und bis zu dreimal mehr Photonen pro Zeiteinheit abgestrahlt werden. Das Endergebnis dieser Rechnungen ist, dass diese zusätzlichen Photonen in den Wellenleiter eingekoppelt werden. Der Anteil der in den Wellenleiter eingekoppelten Lumineszenz kann somit bis zu dreimal so gross sein wie die vom ungestörten Dipol in den gesamten Raumwinkel abgestrahlte Lichtintensität.

Das Ausführungsbeispiel 1 belegt diese Erkenntnis.

Weitere bevorzugte Ausführungsformen des erfindungsgemässen integriert optischen Lumineszenzsensors sind solche, die aus einem einzigen wellenleitenden Bereich in Verbindung mit einem Einkoppelgitter (4) oder einem Auskoppelgitter (7) oder den beiden Gittern bestehen. Bevorzugt sind weiterhin erfindungsgemässe Sensorplattformen, die aus mehreren getrennten wellenleitenden Bereichen bestehen.

Am Detektor ist bei den erfindungsgemässen Anordnungen die Lumineszenzstrahlung räumlich vom Anregungslicht getrennt.

Die erfindungsgemässen Anordnungen werden anhand der Zeichnungen näher erläutert, wobei die Zeichnungen lediglich beispielhafte Ausführungsformen darstellen sollen. Die Zeichnungen sind nicht zur Einschränkung der Erfindung heranzuziehen. Beispielsweise sind die verschiedenen Möglichkeiten der vorangehend ausgeführten polarisationsseletiven Lumineszenzdetektion, sowie die Übertragung der erfindungsgemässen Ausführungen des integriert optischen Lumineszenzsensors auf Sensorplattformen mit mehreren getrennten wellenleitenden Bereichen in den Zeichnungen nicht ausgeführt, gleichwohl aber, auch in Kombination mit den zeichnerisch dargestellten Ausführungsformen, Teil der vorliegenden Erfindung.

Es zeigen:
- Figur 1: schematisch eine erfindungsgemässe Anordnung mit Nachweis der Volumenlumineszenz;
- Figur 2: schematisch einen Lumineszenz-Wellenleitersensor mit Nachweis der Volumenlumineszenz nach dem Stand der Technik mit koplanarem Strahlengang als Schnitt in der x-z-Ebene;
- Figur 3: schematisch eine Abwandlung von Figur 2 mit "backward coupling";
- Figur 4a: ein Schnitt in der x-z-Ebene einer Anordnung nach Figur 1;
- Figur 4b: ein Schnitt in der y-z-Ebene der Anordnung nach Figur 1 bzw. 4a;
- Figur 5: eine Anordnung entsprechend Figur 1 mit Blende in der Einkoppelebene im Schnitt;
- Figur 6: schematisch eine erfindungsgemässe Anordnung mit Nachweis der in den Wellenleiter eingekoppelten Lumineszenz;
- Figur 7: eine Anordnung entsprechend Figur 6 im Schnitt der Einkoppelebene;
- Figur 8: ein Schnitt in der x-z-Ebene einer bekannten Anordnung mit Wellenleiter-Detektion, bei der Einfallsebene, Einkoppelebene und Nachweisrichtung koplanar sind (entspricht Figur 1 der WO 95/33198);
- Figur 9a: ein Schnitt in der x-z-Ebene durch eine Anordnung nach Figur 6;
- Figur 9b: ein Schnitt in der y-z-Ebene zu Figur 9a.

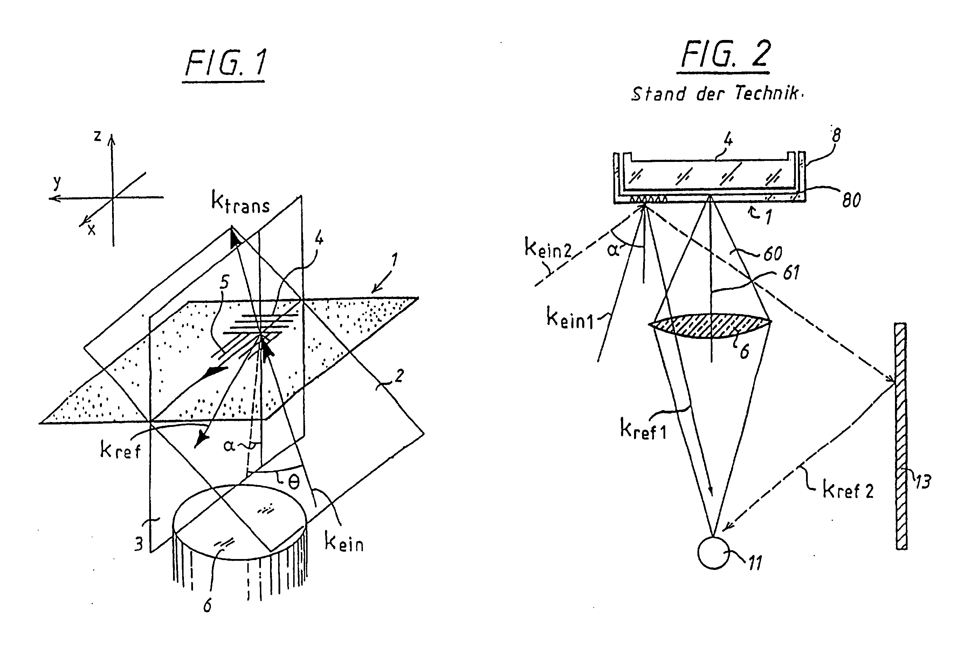

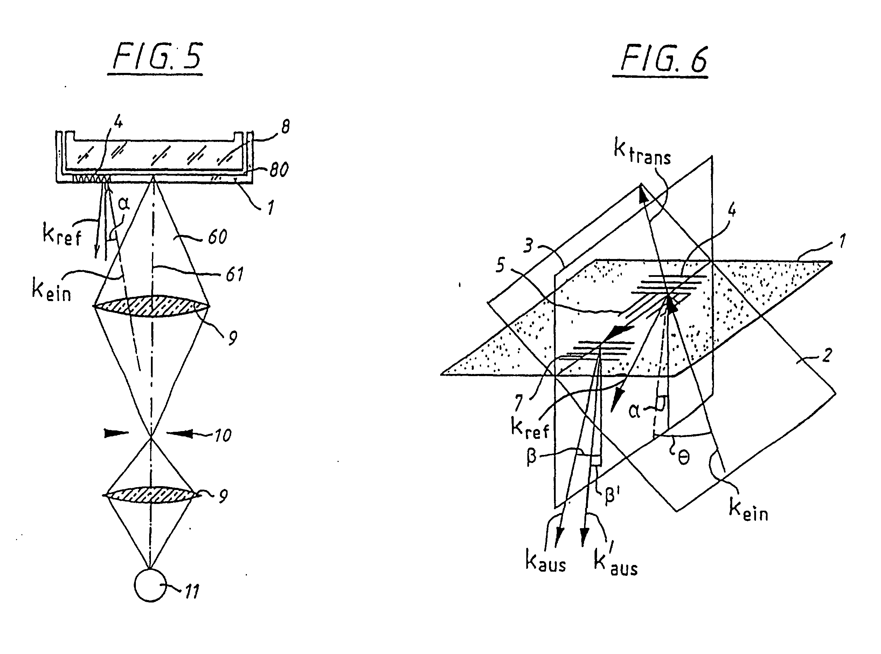

Die Beispiele der Figuren 1 und 6 tragen unterschiedlichen Verfahren für den Nachweis der Lumineszenzstrahlung Rechnung.

Figur 1 zeigt den Nachweis der Volumenlumineszenz:

Ein Anteil der von der geführten Welle angeregten Lumineszenzstrahlung wird in den vollen Raum emittiert, dieser kann über eine Sammeloptik erfasst werden (gemäss dem von der Optik erfassten Raumwinkel).

Figur 6 zeigt den Nachweis der in den Wellenleiter eingekoppelten Lumineszenz. Komplementär zu der in den Raum emittierten Lumineszenzstrahlung wird diese teilweise wieder als geführte Welle in den Wellenleiter eingekoppelt und dort transportiert. Zum Nachweis kann hier ein Auskoppelgitter verwendet werden, das vom Einkoppelgitter räumlich getrennt ist und gleiche oder unterschiedliche Gitterperiode haben kann. Das Auskoppelgitter kann in einer weiteren bevorzugten Geometrie auch mit dem Einkoppelgitter identisch sein.

In beiden Figuren ist die Flüssigkeitszelle zur Probenzuführung nicht gezeigt.

Eine Auswahl unter den beiden Verfahren und Anordnungen ist für die spezielle (gewünschte) Anwendung zu treffen, unter Berücksichtigung von: Bindungslänge und Abstand der an der Wellenleiteroberfläche immobilisierten Moleküle, effektiven Modenbrechwerten der im Wellenleiter geführten Strahlung (abhängig von Brechzahl und Schichtdicke), Wellenleiter-Dämpfung bei Anregungs- und Lumineszenz-Wellenlänge, Sensorfläche und -geometrie, Probenvolumen über dem Sensor und Strömungsverhältnisse in der Probenzelle. Es kann auch eine Kombination beider Verfahren angebracht sein.

Beim Nachweis der Volumenfluoreszenz gemäss Figur 1 wird durch ein Einkoppelgitter (4) in der Sensorebene (1) eine geführte Welle (5) mit der Wellenlänge des einfallenden Lichtstrahls angeregt. Die vom evaneszenten Feld der geführten Welle (5) angeregte Lumineszenz der Probe im Grenzbereich zum Wellenleiter (1), die in den vollen Raumwinkel abgestrahlt wird, wird grossenteils von einer Sammeloptik (6) unterhalb der Sensorebene (1) erfasst. Vom k-Vektor der einfallenden Lichtstrahlen (kₑᵢₙ) und der geführten Welle (5) wird die Einfallsebene (2) aufgespannt, die Einkoppelebene (3) wird durch die Normale zur Sensoroberfläche (1) und durch die geführte Welle (5) aufgespannt.

θ ist der Winkel zwischen Einfallsebene (2) und Einkoppelebene (3). Die Einstrahlung des Anregungslichts ausserhalb der Einkoppelebene (3) hat zur Folge, dass die k-Vektoren der einfallenden Strahlung (kₑᵢₙ) in der von der Einkoppelebene (3) verschiedenen Einfallsebene (2) liegen. Weiterhin kann durch die Verwendung von "backward coupling" - d.h. verschiedene Richtung der x-Komponenten der k-Vektoren der einfallenden Lichtstrahlen (kₑᵢₙ) und der geführten Welle im Wellenleiter (1) - eine weitere räumliche Trennung durch die unterschiedliche Ausbreitungsrichtung erzielt werden. Dadurch kann mittels einfacher Massnahmen sichergestellt werden, dass keine direkten Strahlanteile des Anregungslichts in den Lumineszenzdetektor gelangen, z.B. durch Schwärzung und Mattierung von Probenzelle und mechanischen Einheiten nahe des Sensors, sowie durch Verwendung von Lichtfallen für die transmittierten und reflektierten Teile (kₜᵣₐₙₛ, k_{ref}) der einfallenden Lichtstrahlen. Diese Massnahmen sind auch bei geringen Abweichungen der Einkoppelgeometrie von den Soll-Werten vollständig wirksam.

Zur Erläuterung der Vorteile unterschiedlicher Einkoppel- und Einfallsebene werden nachfolgend die Probleme im Detail dargestellt, die bei Verzicht auf diese Massnahme, also nach dem Stand der Technik, bei der Detektionsmethode Volumenfluoreszenz auftreten:

In Figur 2 ist ein Strahlengang für diesen Fall gezeigt, die Anregungsstrahlung A wird in Richtung kₑᵢₙ in der Einkoppelebene x-z zugeführt. Ergänzend zu Figur 1 sind auch die Flüssigkeitszelle (8) mit Probe (80) über der Sensorebene (1) und der Detektor (11) dargestellt, sowie die Apertur der Sammeloptik (6) mit Detektionsstrahlengang (60) und dessen optischer Achse (61). Für die Einkoppelung ist "forward coupling" gezeigt. Der Einkoppelwinkel (α) zwischen (kₑᵢₙ) und Sensor-Normale ist so gross zu wählen, dass der am Sensor reflektierte Anteil nicht direkt über die Apertur der Sammeloptik (6) auf den Detektor (11) gelangen kann. Zur Veranschaulichung sind in Figur 2 zwei Fälle mit zu geringem (kₑᵢₙ₁, k_{ref1}, durchgezogen) und ausreichend grossem (kₑᵢₙ₂, k_{ref2}, gestrichelt) Einkoppelwinkel (α) gezeigt. Da der minimal notwendige Einkoppelwinkel (α) von der Apertur der Sammeloptik (6) bestimmt wird, erfordert eine lichtstarke Sammeloptik hoher Apertur Einkoppelwinkel weit ausserhalb der Senkrechten auf die Sensorebene.

Durch den grossen Einkoppelwinkel wird die konstruktive Ausführung des optischen Moduls für den Betrieb des Wellenleiter-Sensors gegenüber einer Version mit Winkeln nahe der Sensor-Normalen deutlich aufwendiger.

Weiterhin kann auch bei ausreichend grossem Einkoppelwinkel (α) die reflektierte Anregungsstrahlung (k_{ref}) bereits durch eine einfache Reflexion an einer Wandung (13) auf den Detektor (11) treffen. Auch bei Einsatz bekannter Massnahmen zur Unterdrückung von Streulicht, wie z.B. Mattierung und Schwärzung der Oberflächen (13), ist damit die Gefahr einer Störlichterzeugung mit Einfluss auf den Detektor (11) gegeben. Nach dem Stand der Technik werden bei Lumineszenzdetektion Kanten- oder Bandpassfilter zur Separation von Lumineszenz- und Anregungslicht verwendet. Bei gegebenem Sperrverhältnis der Filter limitiert das Niveau der Störstrahlung bei der Anregungswellenlänge die Auflösung des Messverfahrens.

Alternativ zu Figur 2 zeigt Figur 3 einen Strahlengang, bei dem einige der oben genannten Probleme durch Einsatz von "backward coupling" zur Anregung der geführten Welle vermieden werden. Auch in diesem Fall sollten Einkoppelwinkel α > 30° vermieden werden, in Figur 3 ist dazu als Beispiel die Einkopplung durch die Sammeloptik (6) hindurch gezeigt. Diese Konfiguration ist speziell für die hochempfindliche Lumineszenzdetektion von Nachteil: auch durch Streuung an den Oberflächen der verwendeten optischen Komponenten, vor allem Spiegel (14) und Sammeloptik (6), kann Störlicht nahe am Detektor (11) entstehen.

Zudem kann wiederum bereits durch eine einfache Reflexion an einer Wandung (13) Störlicht auf den Detektor (11) geführt werden.

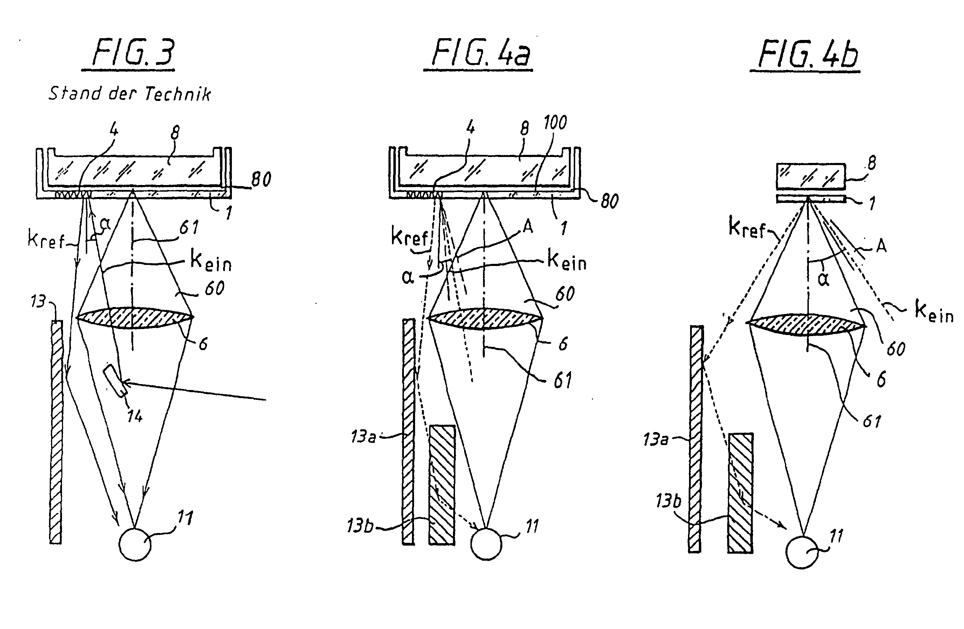

Figur 4a zeigt nun in x-z-Schnittdarstellung, Figur 4b in y-z-Schnittdarstellung, wie sich die Konfiguration gemäss Figur 1 mit zur Einkoppelebene (3) verkippter Eintrittsebene (2) auf die Störsignale auswirkt. Wichtig ist, dass in den x-z- und y-z-Schnitten jeweils die Projektion der k-Vektoren auf die Schnittebene gezeigt ist, erkennbar an der gestrichelten Darstellung der Vektoren. Für die Einkopplung ist "backward coupling" (Rückwärtskopplung) gewählt, durch die Verkippung der Einfallsebene (2) gegen die gezeigte x-z-Einkoppelebene (3) kann das Anregungslicht an der Linse (6) vorbeigeführt werden. Wichtig ist, dass gegenüber den Konfigurationen in Figur 2 und 3 bei gleicher Apertur der Linse (6) die zum seitlichen Passieren der Linse (6) notwendigen Winkel in den x-z- und y-z-Ebenen kleiner sind: z.B. für α = θ ist tanα um den Faktor √2 gegenüber dem Fall "alle k-Vektoren in x-z-Ebene" kleiner.

Entscheidend ist jedoch die Auswirkung der verkippten Einkoppelebene (3) auf das Verhalten der reflektierten Strahlungsanteile: durch diese Verkippung sind mindestens zwei Reflexionsvorgänge notwendig, um Strahlung aus dem Anregungslichtstrahl (A) mit der optischen Achse auf dem eingezeichneten Wellenvektor (kₑᵢₙ) in den Detektionsstrahlengang (60) und dort in den Bereich des Detektors (11) zu bringen. Im Gegensatz dazu kann bei der koplanaren Konfiguration gemäss Figur 2 oder 3 bereits eine einzelne Reflexion an einer Wandung diese Auswirkung haben.

In Figur 4a, b sind daher zwei Teile von Wandungen (13a) und (13b) gezeigt, die geschnittene Wandung ist jeweils mit einer durchgezogenen Linie gezeichnet, die in der Zeichenebene liegende mit einer gestrichelten Linie. Durch diese Erhöhung der Anzahl der notwendigen Reflexionsvorgänge für das Einbringen von Störstrahlung in den Detektor (11) wird die Effizienz aller Massnahmen zur Störstrahlungs-Unterdrückung, wie z.B. Mattierung oder Schwärzung von Flächen, oder Einsatz von Lichtfallen, signifikant verbessert.

Der Einfluss von Reflexionen an den Wänden (13) des optischen Systems oder an Sensor (1) und Flüssigkeitszelle (8) könnte theoretisch auch durch die Verwendung schiefer Winkel ungleich 90° bei der Formgebung und Positionierung der Teile vermieden werden. Dadurch würde die Unterdrückung von Störsignalen jedoch im Detail von der Geometrie für Anregung und Auskopplung abhängen. Bereits geringe Aenderungen des Sensordesigns würden Aenderungen aller Teile der Hardware nach sich ziehen. Für eine möglichst universelle Auslegung von Fluidzelle (8) und Auslesesystem ist die Verwendung verkippter optischer Ebenen (2), (3) der Ausführung mit schiefen Bauelementen und Begrenzungsflächen eindeutig vorzuziehen.

Die sichere räumliche Diskriminierung von Lumineszenzsignal und direkten Strahlanteilen ermöglicht die hintergrundfreie Lumineszenzdetektion und schafft damit die Voraussetzung, um auch hochempfindliche Nachweistechniken, wie z.B. Single-Photon-Counting, im Nachweissystem nutzen zu können.

Eine weitere Massnahme zur Unterdrückung von Fremdlicht durch Störanteile der Anregungsstrahlung ist in Figur 5 gezeigt. Diese zeigt einen Schnitt durch die Einkoppelebene (3) der Figur 1 (entsprechend Figur 4a). Durch die Wahl des Winkels 6 zwischen Eintrittsebene (2) und Einkoppelebene (3) kann sichergestellt werden, dass die Anregungsstrahlung mit (kₑᵢₙ) nicht durch die Sammeloptik (9) für die Lumineszenzstrahlung tritt, sondern räumlich getrennt ausserhalb der gezeigten Ebene an (9) vorbei auf das Einkoppelgitter (4) trifft. Die im Bereich der geführten Welle (5) angeregte Lumineszenzstrahlung wird von der Sammeloptik (9) zunächst in eine Zwischenbildebene abgebildet, in der eine Blende (10) Licht von unerwünschten Bereichen der Sensoroberfläche ausblendet. Dadurch kann Streulicht aus dem Bereich des Einkoppelgitters (4), bedingt z.B. durch erhöhte Oberflächenrauhigkeit derwellenleitenden Schicht (1) im strukturierten Bereich oder durch Eigenlumineszenz des (in Figur 5 nicht gezeigten) Substrates unterhalb der wellenleitenden Schicht (1), vor dem Detektor (11) ausgeblendet werden. Die optische Achse (61) des Detektionsstrahlengangs (60) und dessen gesamte Geometrie wird so sauber festgelegt.

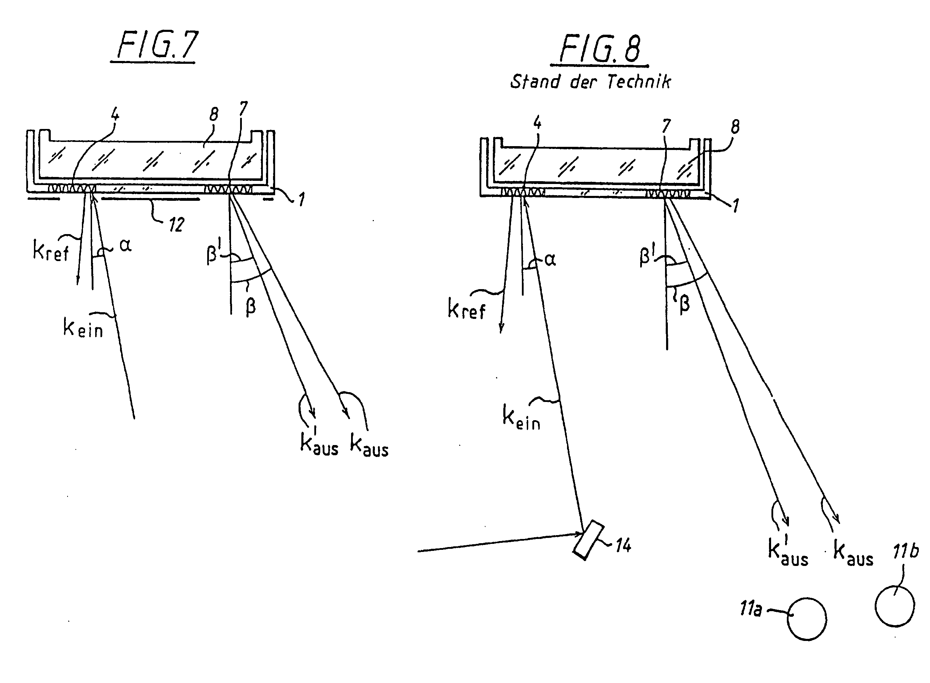

In Figur 6 ist die Konfiguration für den Lumineszenznachweis bei Verwendung der Wellenleiterdetektion zum Nachweis dargestellt. Die Einkopplung der Anregungsstrahlung (A) mit Symmetrieachse und Wellenvektor (kₑᵢₙ) und die Ausbreitung der geführten Welle (5) ist analog zur in Figur 1 gezeigten Volumendetektion. Unterschiedlich ist, dass im Fall der Wellenleiterdetektion die in die wellenleitende Schicht (1) wieder eingekoppelte Lumineszenzstrahlung von einem Auskoppelgitter (7) ausgekoppelt wird, das vom Einkoppelgitter (4) räumlich getrennt ist. Dieses Auskoppelgitter (7) kann mit einer vom Einkoppelgitter (4) verschiedenen Gitterkonstante realisiert werden. Die Auskoppelwinkel für die durch den Wellenleiter transmittierte Einkoppelstrahlung (kₐᵤₛ) und für die in den Wellenleiter eingekoppelte Lumineszenzstrahlung (k'ₐᵤₛ) sind mit β und β' bezeichnet. Die Winkel β und β' sind aufgrund der Stokes-Verschiebung zwischen Anregungs- und Lumineszenzstrahlung und der Dispersion des Auskoppelgitters (7) unterschiedlich. Damit werden beide geometrisch getrennt. Für den Lumineszenznachweis über Wellenleiter-Detektion ist die Anordnung in Figur 7 noch einmal als Querschnitt in der Einkoppelebene (3) gezeigt. Zusätzlich zu den bereits genannten Massnahmen zur hintergrundfreien Detektion ist hier eine weitere gezeigt, dies ist die Verwendung einer Blende (12) nahe der Sensorunterseite. Dadurch wird Störstrahlung reduziert, die im Bereich der geführten Anregungswelle (5) zwischen Einkoppelgitter (4) und Auskoppelgitter (7) entstehen kann, z.B. durch Eigenlumineszenz des (in Figur 7 nicht gezeigten) unter der wellenleitenden Schicht (1) liegenden Substratmaterials oder durch Lumineszenz von Molekülen im Flüssigkeitsvolumen oberhalb des von der geführten Welle (5) angeregten Bereichs der Probe (8).

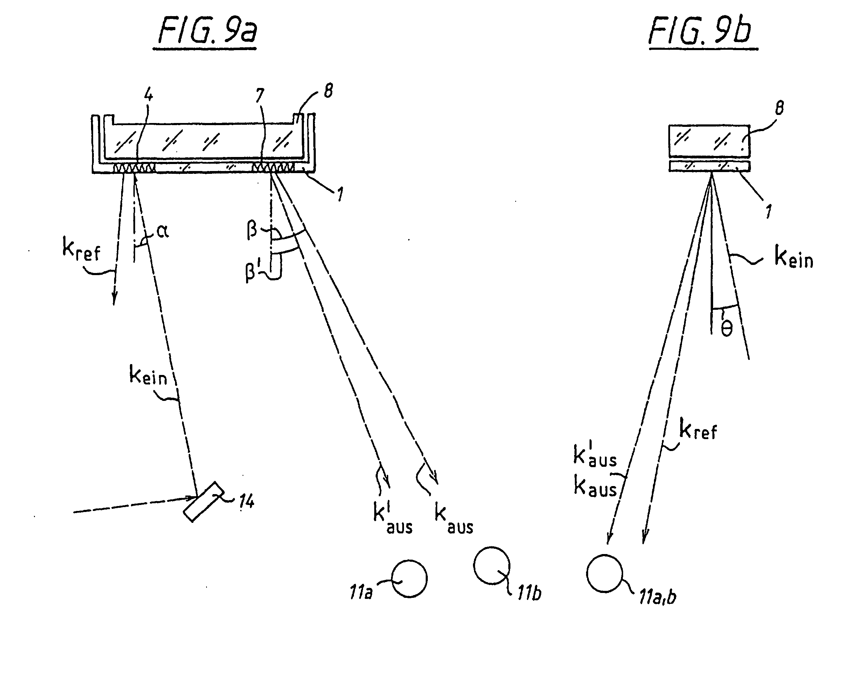

Für den Fall der Lumineszenzdetektion über den Wellenleiter sind die Vorteile unterschiedlicher Einkoppel- (3) und Eintrittsebene (2) anhand von Figur 8 aus dem Stand der Technik im Vergleich zu dem erfindungsgemässen Beispiel der Figuren 9a und 9b dargestellt. In Figur 8 ist ein Schnitt in der Einkoppelebene (x-z-Ebene) für die Einkopplung über "backward coupling" gezeigt. Das einfallende Lichtbündel (kₑᵢₙ) wird über einen Spiegel (14) dem Wellenleiter (1) zugeführt. Zu beachten ist, dass die geometrischen Abmessungen dieses Spiegels (14) die Miniaturisierung von Sensor (1) und optischer Anordnung behindern, da der Spiegel (14) und die Detektoren (11a) und (11b) einen Mindestabstand aufgrund ihrer Grösse haben müssen, der weitaus grösser ist als die Länge des Wellenleiters (1). Ein Weglassen des Spiegels (14) würde eine Zuführung der Anregungsstrahlung weit unterhalb der Detektoren (11 a) und (11 b) erfordern, auch dies würde wiederum eine Miniaturisierung und kompakte Ausführung der optischen Anordnung behindern.

Für die Wellenleiter-Detektion kann die reflektierte Anregungsstrahlung nicht wie bei der Detektion der Volumenlumineszenz über eine einfache Reflexion an den normalen Bauelementen des Sensors in den Bereich des Detektors (11) gelangen. Wie für den Fall der Volumen-Lumineszenz-Detektion ist jedoch bei gegenüber der Einkoppelebene (3) verkippter Einfallsebene (2) mindestens eine Reflexion mehr als im unverkippten Fall notwendig, um die reflektierte Anregungsstrahlung zum Detektor (11) zu bringen.

Der erfindungsgemässe Fall verkippter Einfallsebene (2) und Einkoppelebene (3) für Wellenleiter-Lumineszenz-Detektion ist in Figur 9a und 9b dargestellt, dabei sind für die Wellen-Vektoren kₑᵢₙ, k_{ref}, kₐᵤₛ, k'ₐᵤₛ die Projektionen in die jeweils gezeigte Schnittebene x-z bei Figur 9a, y-z bei Figur 9b dargestellt (erkennbar an den gestrichelten Linien für die Vektoren). Der Spiegel (14) oder ein anderes Umlenksystem für die Anregungsstrahlung kₑᵢₙ können ausserhalb der Einkoppelebene (3) positioniert werden, so dass durch die Verkippung der Strahlen jeweils Abschattungen durch optische Elemente vermieden werden können. Weiterhin zeigt Figur 9b mit dem y-z-Schnitt, dass durch die Verkippung alle Strahlanteile (Anregung (kₑᵢₙ), reflektierte Anregung (k_{ref}), Auskopplung Anregungslicht (kₐᵤₛ), Auskopplung Lumineszenzlicht (k'ₐᵤₛ)) räumlich getrennt sind. Die Winkel für einfallende (α) und wieder ausgekoppelte (β) Anregungsstrahlung sind immer dann unterschiedlich, wenn die Gitterperioden von Anregungsgitter (4) und Auskoppelgitter (7) unterschiedlich sind. Dies ist durch die verschiedene Kopplungsgeometrie (Anregung über "backward coupling", Auskopplung über "forward coupling") für alle praktisch relevanten Fälle gegeben.

Allen beschriebenen Geometrien mit verkippter Einkoppelebene (3) und Eintrittsebene (2) ist gemeinsam, dass durch die Verkippung dieser beiden Ebenen (2), (3) eine räumliche Trennung der beteiligten Lichtsignale erfolgt, die den Aufwand für andere Massnahmen zur Diskriminierung dieser Strahlanteile signifikant reduziert. Dadurch wird auch die angestrebte Miniaturisierung sowohl des Wellenleitersensors als auch der gesamten optischen Anordnung ermöglicht.

Die Anordnung aller optischen Elemente für den Betrieb des Sensors kann unterhalb der Sensorebene vorgenommen werden, dies ist für den Betrieb solcher Sensoren in Analyse-Automaten vorteilhaft: die Zuführung von Sensoren und Proben sowie flüssigen Medien kann von oben erfolgen, die Messung von unten.

Weiterhin können alle optischen Elemente zum Betrieb des Sensors in einem kompakten Modul mit geringen Aussenabmessungen realisiert werden: als Lichtquelle kann eine Laser-, Lumineszenz- oder Superlumineszenz-Diode verwendet werden, mit optischen und mechanischen Elementen für die Strahlformung und die Verstellung der Einkoppelwinkel - z.B. durch Drehung oder Verschiebung optischer Elemente - , sowie einem Strahlführungs- und Formungssystem für die austretende und ausgekoppelte Strahlung und einem zugehörigen Detektionssystem. Letzteres kann auch um einen Referenzkanal als Mass für die Intensität der eingekoppelten Strahlung ergänzt werden.

Falls aufgrund der Wahl der Anregungswellenlänge eine Laserlichtquelle mit Abmessungen deutlich über denen des integrierten Moduls zum Einsatz kommen soll, wird die Laserstrahlung dem integrierten Modul über einen Lichtwellenleiter zugeführt, vorzugsweise in polarisationserhaltender Ausführung:

Die in den Beispielen beschriebenen Ausführungsformen der Erfindung sind bevorzugt.

### Ausführungsbeispiel 1: Eingekoppelte und im Wellenleiter geführte Fluoreszenz

Das Licht eines grünen HeNe-Lasers (Wellenlänge 543 nm; Melles Griot) wird über ein Rutil-Prisma (Halle) in einen Wellenleiter eingekoppelt (wellenleitende Schicht: 150 nm TiO₂; Substrat: Glas) und regt über das evaneszente Feld eine Farbstofflösung an (Rhodamin 6G, 10⁻⁶ M), welche sich in Tropfenform auf dem Wellenleiter befindet. Ein Detektionssystem bestehend aus 50mm-Sammellinse (Spindler&Hoyer), zwei 550nm-Kantenfiltem (Schott) und einer Si-PIN Photodiode (UDT) im Abstand von 5 cm unterhalb des Transducers erfasst das Fluoreszenzlicht. Einmal wird das in den Raumwinkel abgestrahlte Signal detektiert, zum anderen das in den Wellenleiter eingekoppelte und an einem Koppelgitter (Periode: 400 nm) ausgekoppelte Fluoreszenzlicht. Das am Koppelgitter ausgekoppelte Signal, welches entsprechend der Dispersionseigenschaften des Koppelgitters in einen vom Anregungslicht verschiedenen Winkel abgestrahlt wird, ist um 50% stärker als der mit dem gleichen Detektor gemessene in den Raumwinkel abgestrahlte Anteil.

### Ausführungsbeispiel 2: Erhöhung des Signal-zu-Untergrundverhältnisses durch Verwendung ekreuzter Polarisatoren; eingekoppelte und im Wellenleitergeführte Fluoreszenz in TE-Polarisation

Das Licht eines linear polarisierten HeNe-Lasers (Wellenlänge 633 nm; 1 mW; Melles Griot) wird über ein Koppelgitter in einen Wellenleiter eingekoppelt (wellenleitende Schicht: 150 nm Ta₂O₅; Substrat: Corningglas C7059) und regt über das evaneszente Feld eine aufgeschleuderte ca. 50nm dicke Polymermatrix an, in der sich ein homogen verteilter Farbstoff befindet (Ciba-Farbstoff WA 3010, 10⁻⁹ M). Mittels Verzögerungsplatte (Lambda/2 für 633 nm; Rocky Mountains Instr.) und Polarisator (Spindler&Hoyer) kann wahlweise TE- oder TM-polarisiertes Anregungslicht eingekoppelt werden. Ein Detektionssystem bestehend aus Analysator; Notchfilter (Kaiser) und einer CCD-Kamera (Kappa) im Abstand von 10 cm unterhalb des Transducers erfasst das in den Wellenleiter eingekoppelte und am Koppelgitter (Periode: 320 nm) ausgekoppelte Fluoreszenzlicht. Es werden für beide Anregungspolarisationen die Signalintensitäten sowohl bei gekreuztem wie auch bei parallelem Analysator gemessen. Wird TE-polarisiertes Licht eingekoppelt, so beträgt das Verhältnis der beiden am Koppelgitter ausgekoppelten Fluoreszenzkomponenten TE/TM 7:1.

Wird TM-polarisiertes Licht eingekoppelt, so beträgt das Verhältnis der beiden am Koppelgitter ausgekoppelten Fluoreszenzkomponenten TE/TM 2.5:1.

## Patentansprüche

1. Integriert optischer Lumineszenzsensor mit einem Anregungslichtbündel (A), mit einer ersten optischen Achse (kₑᵢₙ), das in einem planaren Wellenleiter (1) eine geführte Welle (5) ausbildet und mit einer mit dessen evaneszentem Feld wechselwirkenden Probe (80) zur Erzeugung von Lumineszenzlicht,
mit einem vom Wellenleiter (1) abgehenden Detektionsstrahlengang (60) mit einer zweiten optischen Achse (61), mit einem Auskoppelgitter (7) zur Auskopplung des im Wellenleiter (1) geführten Teils des Lumineszenzlichts, oder
mit einem Detektionsstrahlengang (60) mit einer zweiten optischen Achse (61), der einen Teil der in den vollen Raum emittierten Lumineszenzstrahlung darstellt,
**dadurch gekennzeichnet, daß** das Lumineszenzlicht vom Anregungslicht durch folgende Massnahmen räumlich getrennt ist:
- die windschiefe geometrische Anordnung der optischen Achsen (kₑᵢₙ, 61), wobei
- die Einkoppelebene (3), welche von der Normalen zum Wellenleiter (1) und dem Wellenvektor der geführten Welle (5) aufgespannt wird, und
- die Eintrittsebene (2), welche von den Wellenvektoren des auf den Wellenleiter (1) auftreffenden Anregungslichtbündels (kₑᵢₙ) und der geführten Welle (5) aufgespannt wird, miteinander einen Winkel (θ) einschliessen, der grösser als 1° ist.

2. Integriert optischer Lumineszenzsensor gemäss Anspruch 1, **dadurch gekennzeichnet, dass**
- ein Detektionssystem mit einem Detektionsstrahlengang (60, 61, kₐᵤₛ) und einem Detektor (11), welches das Lumineszenzlicht nachweist, vorhanden ist,
- durch ein Einkoppelgitter (4) ein Anregungslichtbündel (A) in den Wellenleiter (1) eingekoppelt wird, eine geführte Welle (5) ausbildet und so mit der Probe (80) wechselwirkt und Lumineszenzlicht erzeugt.

3. Integriert optischer Lumineszenzsensor nach Anspruch 1, **dadurch gekennzeichnet, dass** eine Sammeloptik (6, 9) mit dem Detektionsstrahlengang (60) einen Teil der in den vollen Raum emittierten Lumineszenzstrahlung erfasst und zu einem Detektor (11) führt.

4. Integriert optischer Lumineszenzsensor nach mindestens einem der Ansprüche 1 oder 2, **dadurch gekennzeichnet, dass** ein Einkoppelgitter (4) und ein Auskoppelgitter (7) am planaren Wellenleiter (1) angeordnet sind und dass der im Wellenleiter (1) geführte und vom Auskoppelgitter (7) ausgekoppelte Teil der Lumineszenzstrahlung als Detektionsstrahlengang (kₐᵤₛ) einem Detektor (11) zugeführt wird.

5. Integriert optischer Lumineszenzsensor nach mindestens einem der Ansprüche 1 oder 2, **dadurch gekennzeichnet, dass** ein Einkoppelgitter (4) am planaren Wellenleiter (1) angeordnet ist und dass der im Wellenleiter (1) geführte Teil der Lumineszenzstrahlung am Einkoppelgitter (4) ausgekoppelt und einem Detektor zugeführt wird.

6. Integriert optischer Lumineszenzsensor nach Anspruch 1, **dadurch gekennzeichnet, dass** der Winkel (θ) zwischen Einkoppelebene (3) und Einfallsebene (2) kleiner als 30°, vorzugsweise kleiner als 15° ist.

7. Integriert optischer Lumineszenzsensor nach mindestens einem der Ansprüche 1 bis 6, **dadurch gekennzeichnet, dass** nur vollständig transversal magnetisch polarisiertes Anregungslicht (TM), zur Anregung eines im Wellenleiter geführten TM-Modes, oder vollständig transversal elektrisch polarisiertes Anregungslicht (TE), zur Anregung eines im Wellenleiter geführten TE-Modes, verwendet wird.

8. Integriert optischer Lumineszenzsensor nach Anspruch 7, dadruch **gekennzeichnet**, dass zur Detektion des Lumineszenzlichts eine von der Polarisation des Anregungslichts verschiedene Polarisation ausgewählt wird.

9. Integriert optischer Lumineszenzsensor nach einem der Ansprüche 6 oder 8, **dadurch gekennzeichnet, dass** bei Verwendung von TE-polarisiertem Anregungslicht zur Anregung eines im Wellenleiter geführten TE-Modes, der TM-polarisierte Teil des Lumineszenzlichts detektiert wird.

10. Integriert optischer Lumineszenzsensor nach einem der Ansprüche 6 oder 8, **dadurch gekennzeichnet, dass** bei Verwendung von TM-polarisiertem Anregungslicht, zur Anregung eines im Wellenleiter geführten TM-Modes, der TE-polarisierte Teil des Lumineszenzlichts detektiert wird.

11. Integriert optischer Lumineszenzsensor nach mindestens einem der Ansprüche 1 oder 7 bis 9, **dadurch gekennzeichnet, dass** die Sensorplattform aus einem einzigen wellenleitenden Bereich in Verbindung mit einem Einkoppelgitter (4) besteht.

12. Integriert optischer Lumineszenzsensor nach mindestens einem der Ansprüche 1 oder 7 bis 9, **dadurch gekennzeichnet, dass** die Sensorplattform aus einem einzigen wellenleitenden Bereich in Verbindung mit einem Auskoppelgitter (7) besteht.

13. Integriert optischer Lumineszenzsensor nach mindestens einem der Ansprüche 1 bis 12, **dadurch gekennzeichnet, dass** die Sensorplattform aus einem einzigen wellenleitenden Bereich in Verbindung mit einem Einkoppelgitter (4) und aus einem Auskoppelgitter (7) besteht.

14. Integriert optischer Lumineszenzsensor nach mindestens einem der Ansprüche 1-12, **dadurch gekennzeichnet, dass** die Sensorplattform aus mehreren getrennten wellenleitenden Bereichen in Verbindung mit jeweils einem oder einem gemeinsamen Einkoppelgitter (4) besteht.

15. Integriert optischer Lumineszenzsensor nach mindestens einem der Ansprüche 1-14, **dadurch gekennzeichnet, dass** die Sensorplattform aus mehreren getrennten wellenleitenden Bereichen in Verbindung mit jeweils einem oder einem gemeinsamen Auskoppelgitter (7) besteht.

16. Integriert optischer Lumineszenzsensor nach mindestens einem der Ansprüche 1-15, **dadurch gekennzeichnet, dass** die Sensorplattform aus mehreren getrennten wellenleitenden Bereichen in Verbindung mit jeweils einem oder einem gemeinsamen Einkoppelgitter (4) und jeweils einem oder einem gemeinsamen Auskoppelgitter (7) besteht.

## Claims

1. An integrated-optical luminescence sensor having an excitation light beam (A) with a first optical axis (kₑᵢₙ), which forms in a planar waveguide (1) a guided wave, and a sample (80) interacting with the evanescent field thereof and thus generates luminescence light,
with a detection beam path (60), with a second optical axis (61), that comes from the waveguide (1), with a coupling-out grating (7) for coupling out the portion of luminescence light guided in the waveguide (1), or
with a detection beam path (60) with a second optical axis (61) that captures a portion of the luminescence radiation emitted into the entire space,
**characterized in that** luminescence light is physically separate from the excitation light by the following provision:
- the skew geometric arrangement of the optical axes (kₑᵢₙ, 61), whereby
- the coupling-in plane (3), which is defined by the normal to the waveguide (1) and the wave vector of the guided wave 5, and
- the entry plane (2), which is defined by the wave vectors of the excitation light beam (kₑᵢₙ) incident on the waveguide (1) and the guided wave (5), together form an angle (θ) that is greater than 1°.
- preferably greater than the angle of divergence of the excitation light beam (A).

2. An integrated-optical luminescence sensor according to claim 1, **characterized in that**
- a detection system having a detection beam path (60, 61, kₐᵤₛ) and a detector (11) that detects the luminescence light is provided, an excitation light beam (A) that is coupled into the waveguide (1) by the coupling-in grating (4), forms a guided wave (5) and thus interacts with the sample (80) and generates luminescence light.

3. An integrated-optical luminescence sensor according to either claim 1 or claim 2, wherein a focussing lens system (6, 9) with a detection beam path (60) captures a portion of the luminescence radiation emitted into the entire space and feeds it to a detector (11).

4. An integrated-optical luminescence sensor according to at least one of claims 1 or 2, wherein a coupling-in grating (4) and a coupling-out grating (7) are arranged on the planar waveguide (1) and wherein the portion of luminescence radiation guided in the waveguide (1) and coupled out by the coupling-out grating (7) is fed as detection beam path (kₐᵤₛ) to a detector (11).

5. An integrated-optical luminescence sensor according to at least one of claims 1 or 2, wherein a coupling-in grating (4) is arranged on the planar waveguide (1) and wherein the portion of luminescence radiation guided in the waveguide (1) is coupled out at the coupling-in grating (4) and fed to a detector.

6. An integrated-optical luminescence sensor according to claim 1, wherein the angle (θ) between entry plane (3) and plane of incidence (2) is smaller than 30°, preferably smaller than 15°.

7. An integrated-optical luminescence sensor according to at least one of claims 1 to 6, wherein only completely transversely magnetically polarised excitation light (TM) is used for the excitation of a TM mode guided in the waveguide, or completely transversely electrically polarised excitation light (TE) is used for the excitation of a TE mode guided in the waveguide.

8. An integrated-optical luminescence sensor according to claim 7, wherein in order to detect the luminescence light a polarisation that is different from the polarisation of the excitation light is selected.

9. An integrated-optical luminescence sensor according to any one of claims 1, 4, 6 and 8, wherein using TE-polarised excitation light, to excite a TE mode guided in the waveguide, the TM-polarised portion of luminescence light is detected.

10. An integrated-optical luminescence sensor according to one of claims 6 and 8, wherein using TM-polarised excitation light, to excite a TM mode guided in the waveguide, the TE-polarised portion of luminescence light is detected.

11. An integrated-optical luminescence sensor according to at least one of claims 1 and 7 to 9, wherein the sensor platform consists of a single wave-guiding region in conjunction with a coupling-in grating (4).

12. An integrated-optical luminescence sensor according to at least one of claims 1 and 7 to 9, wherein the sensor platform consists of a single wave-guiding region in conjunction with a coupling-out grating (7).

13. An integrated-optical luminescence sensor according to at least one of claims 1 to 12, wherein the sensor platform consists of a single wave-guiding region, in conjunction with a coupling-in grating (4), and a coupling-out grating (7).

14. An integrated-optical luminescence sensor according to at least one of claims 1 to 12, wherein the sensor platform consists of several separate wave-guiding regions in conjuncttion with one coupling-in grating (4) each or a common coupling-in grating (4).

15. An integrated-optical luminescence sensor according to at least one of claims 1 to 14, wherein the sensor platform consists of several separate wave-guiding regions in conjunction with one coupling-out grating (7) each or a common coupling-out grating (7).

16. An integrated-optical luminescence sensor according to at least one of claims 1 to 15, wherein the sensor platform consists of several separate wave-guiding regions in conjunction with one coupling-in grating (4) each or a common coupling-in grating (4) and one coupling-out grating (7) each or a common coupling-out grating (7).

## Revendications

1. Capteur optique intégré de luminescence avec un faisceau de lumière d'excitation (A), avec un premier axe optique (kₑᵢₙ) qui forme dans un guide d'onde planaire (1) une onde guidée (5) et avec un échantillon (80) interagissant avec son champ évanescent pour la production de lumière de luminescence,
avec un trajet de rayons de détection (60) partant du guide d'onde (1), avec un deuxième axe optique (61), avec une grille de découplage (7) pour le découplage de la partie de la lumière de luminescence guidée dans le guide d'onde (1), ou
avec un trajet de rayons de détection (60) avec un deuxième axe optique (61), qui représente une partie du rayonnement de luminescence émis dans l'espace plein,
**caractérisé en ce que** la lumière de luminescence est séparée spatialement de la lumière d'excitation par les mesures suivantes :
- la disposition géométrique déversée des axes optiques (kₑᵢₙ, 61), sachant que
- le plan de couplage (3), lequel est tendu par la normale au guide d'onde (1) et par le vecteur d'onde de l'onde guidée (5), et
- le plan d'incidence (2), lequel est tendu par les vecteurs d'onde du faisceau de lumière d'excitation arrivant sur le guide d'onde (1) et par l'onde guidée (5), limitent entre eux un angle (θ) qui est supérieur à 1°.

2. Capteur optique intégré de luminescence selon la revendication 1, **caractérisé en ce que**
- il existe un système de détection avec un trajet de rayons de détection (60, 61, kₐᵤₛ) et un détecteur (11) qui détecte la lumière de luminescence,
- par une grille de couplage (4), un faisceau de lumière d'excitation (A) est couplé dans le guide d'onde (1), forme une onde guidée (5) et interagit ainsi avec l'échantillon (80) et produit de la lumière de luminescence.

3. Capteur optique intégré de luminescence selon la revendication 1, **caractérisé en ce qu'**une optique de concentration (6, 9) saisit avec le trajet de rayons de détection (60) une partie du rayonnement de luminescence émis dans l'espace plein et la conduit à un détecteur (11).

4. Capteur optique intégré de luminescence selon l'une au moins des revendications 1 ou 2, **caractérisé en ce qu'**une grille de couplage (4) et une grille de découplage (7) sont disposées sur le guide d'onde (1) planaire et **en ce que** la partie du rayonnement de luminescence guidée dans le guide d'onde (1) et découplée par la grille de découplage (7) est acheminée à un détecteur (11) comme trajet des rayons de détection (kₐᵤₛ).

5. Capteur optique intégré de luminescence selon l'une au moins des revendications 1 ou 2, **caractérisé en ce qu'**une grille de couplage (4) est disposée sur le guide d'onde (1) planaire et **en ce que** la partie du rayonnement de luminescence guidée dans le guide d'onde (1) est découplée sur la grille de couplage (4) et est acheminée à un détecteur.

6. Capteur optique intégré de luminescence selon la revendication 1, **caractérisé en ce que** l'angle (θ) entre le plan de couplage (3) et le plan d'incidence (2) est inférieur à 30°, de préférence inférieur à 15°.

7. Capteur optique intégré de luminescence selon l'une au moins des revendications 1 à 6, **caractérisé en ce que** seule une lumière d'excitation (TM) de polarisation magnétique totalement transversale, pour l'excitation d'un mode TM guidé dans le guide d'onde, ou une lumière d'excitation (TE) de polarisation électrique totalement transversale, pour l'excitation d'un mode TE guidé dans le guide d'onde, est utilisée.

8. Capteur optique intégré de luminescence selon la revendication 7, **caractérisé en ce que**, pour la détection de la lumière de luminescence, une polarisation différente de la polarisation de la lumière d'excitation est choisie.

9. Capteur optique intégré de luminescence selon l'une quelconque des revendications 6 ou 8, **caractérisé en ce que**, lors de l'utilisation de lumière d'excitation polarisée TE pour l'excitation d'un mode TE guidé dans le guide d'onde, la partie polarisée TM de la lumière de luminescence est détectée.

10. Capteur optique intégré de luminescence selon l'une quelconque des revendications 6 ou 8, **caractérisé en ce que**, lors de l'utilisation de lumière d'excitation polarisée TM pour l'excitation d'un mode TM guidé dans le guide d'onde, la partie polarisée TE de la lumière de luminescence est détectée.

11. Capteur optique intégré de luminescence selon l'une au moins des revendications 1 ou 7 à 9, **caractérisé en ce que** la plate-forme du capteur consiste en une seule zone de guidage d'ondes en combinaison avec une grille de couplage (4).

12. Capteur optique intégré de luminescence selon l'une au moins des revendications 1 ou 7 à 9, **caractérisé en ce que** la plate-forme du capteur consiste en une seule zone de guidage d'ondes en combinaison avec une grille de découplage (7).

13. Capteur optique intégré de luminescence selon l'une au moins des revendications 1 à 12, **caractérisé en ce que** la plate-forme du capteur consiste en une seule zone de guidage d'ondes en combinaison avec une grille de couplage (4), et en une grille de découplage (7).

14. Capteur optique intégré de luminescence selon l'une au moins des revendications 1-12, **caractérisé en ce que** la plate-forme du capteur consiste en plusieurs zones de guidage d'ondes séparées, en combinaison avec une grille de couplage (4) chacune ou une grille de couplage commune.

15. Capteur optique intégré de luminescence selon l'une au moins des revendications 1-14, **caractérisé en ce que** la plate-forme du capteur consiste en plusieurs zones de guidage d'ondes séparées, en combinaison avec une grille de découplage (7) chacune ou une grille de découplage commune.

16. Capteur optique intégré de luminescence selon l'une au moins des revendications 1-15, **caractérisé en ce que** la plate-forme du capteur consiste en plusieurs zones de guidage d'ondes séparées, en combinaison avec une grille de couplage (4) chacune ou une grille de couplage commune et avec une grille de découplage (7) chacune ou une grille de découplage commune.
